# EUROPÄISCHE PATENTSCHRIFT

(11) **EP 1 140 670 B1**
(45) Veröffentlichungstag und Bekanntmachung des Hinweises auf die Patenterteilung: **06.04.2005**
(21) Anmeldenummer: 99966866.8
(22) Anmeldetag: 15.12.1999
(51) Int. Cl.: B65G 1/00

(54) **VERFAHREN UND LAGERSYSTEM ZUM EIN- UND AUSLAGERN VON LASTEN**
METHOD AND STORAGE LOADING SYSTEM FOR LOADING AND UNLOADING LOADS IN STORAGE
PROCEDE ET SYSTEME D'ENTREPOSAGE DESTINES AU TRANSFERT DE CHARGES

(30) Priorität: 15.12.1998 DE 19857886
(43) Veröffentlichungstag der Anmeldung: 10.10.2001
(73) Patentinhaber: Grond, Johann Walter, 26723 Emden (DE)
(72) Erfinder: Grond, Johann Walter, 26723 Emden (DE)
(74) Vertreter: Siekmann, Gunnar, Dipl.-Phys.
(86) Internationale Anmeldenummer: PCT/DE1999/003990
(87) Internationale Veröffentlichungsnummer: WO 2000/035780

(56) Entgegenhaltungen:
- US-A- 5 388 955

## Beschreibung

Die Erfindung betrifft ein Verfahren zum Ein- und Auslagern von Lasten in einem Regallager mit mehreren Regalreihen und zwischen den Regalreihen befindlichen Regalgassen. Weiterhin betrifft die Erfindung ein Lagersystem zum Ein- und Auslagern von Lasten mit den Merkmalen des Oberbegriffs des Patentanspruchs 4.

Bisher werden derartige Regallager mit Gabelstaplern und/oder Flurfördergeräten bedient, die teilweise manuell und teilweise automatisiert betrieben werden können. Bei derartigen Lagersystemen muß mit der zu bewegenden Last immer auch ein Transportgerät mit hohem Eigengewicht bewegt werden. Hierzu ist ein vergleichsweise hoher Energieaufwand notwendig, und die mögliche Geschwindigkeit ist begrenzt.

Ein Regallager der eingangs genannten Art ist aus der US 5,388,955 bekannt. Das hier beschriebene Papierlager weist mindestens eine Regalreihe und ein im Bereich der Stirnseite, jedoch zur Regalreihe versetzten Senkrechtförderer auf. Zum Transport der Regalreihen werden einerseits Transportwagen verwendet, auf denen die Papierrolle den Gesamtweg von einer Startposition zu einer Zielposition durchläuft. Zur seitlichen Förderung in den Regalreihen werden darüber hinaus noch seitliche Verfahrwagen eingesetzt.

Aus der US 5,002,449 ist ein Regallager bekannt, bei dem mehrere Regalreihen vorgesehen sind und zwischen den Regalreihen, also in den Regalgassen Senkrechtförderer in üblicher Weise angeordnet sind. Aus der FR 1180339 ist eine Garage für Fahrzeuge bekannt. Diese weist zwei Regalreihen mit einer dazwischenliegenden Regalgasse auf. Das Be- und Entladen erfolgt durch die seitlichen Boxen im Erdgeschoß des Lagers.

Der Erfindung liegt daher die Aufgabe zugrunde, ein Verfahren und ein Lagersystem der eingangs genannten Art zu schaffen, da es besonders schnell mit einem geringen Energieaufwand arbeitet.

Die Lösung der Aufgabe erfolgt verfahrensmäßig mit den Merkmalen des Patentanspruchs 1. Hinsichtlich des Lagersystems erfolgt die Lösung der Aufgabe mit den Merkmalen des Patentanspruchs 4. Vorteilhafte Weiterbildungen der Erfindung sind in den Unteransprüchen beschrieben.

Nach dem verfahrensmäßigen Grundgedanken der Erfindung wird bei einem Regallager mit mehreren Regalreihen, die jeweils wieder mehrere Regalebenen aufweisen, und zwischen diesen Regalreihen befindlichen Regalgassen eine Last an die Stirnseite einer Regalreihe befördert. Die Last an der Stirnseite der Regalreihe wird in vertikaler Richtung in eine Zielebene befördert, in der Zielebene in horizontaler Richtung in die Regalgasse befördert, dann in horizontaler Richtung in der Regalgasse bis zu einem Zielort in der entsprechenden Zielebene und abschließend in horizontaler Richtung aus der Regalgasse an den Zielort in dem Regal befördert. Durch dieses Verfahren wird das Ein- und Auslagern von Lasten vereinfacht, da die Lasten zunächst an die Stirnseite einer Regalreihe oder in eine Lücke zwischen zwei Regalabschnitten gesetzt wird und die Last dann vertikal in die gewünschte Zielebene befördert wird und im übrigen dann so behandelt und transportiert werden kann, als wäre sie bereits im Regal und müßte nur aus dem Regalfach entnommen werden, in der Regalgasse transportiert und an einer gewünschten Stelle wieder in das Regal eingeführt werden. Beim Auslagern der Lasten werden die obengenannten Schritte in entsprechend umgekehrter Reihenfolge durchgeführt. Das Verfahren ist also sowohl für das Ein-, als auch für Auslagern einsetzbar. Auch das Austauschen von Lasten ist mit diesem Verfahren möglich, wobei im Schritt d) die einzulagernde Last zunächst nur bis zu einer Lastbreite versetzt an den Zielort befördert wird, die auszulagernde Last in horizontaler Richtung aus dem Regal in die Regalgasse gefördert wird, dann die einzulagernde Last um eine Lastbreite in horizontaler Richtung befördert wird, bis sie an dem Zielort in der entsprechenden Zielebene ist und dann gemäß Schritt e) in das Regal befördert wird. Die auszulagernde Last wird dann in der oben beschriebenen Weise aus dem Regallager entfernt. Die Richtungswechsel in den einzelnen Schritten der Ein- und Auslagerung bzw. der Beförderung der Lasten werden bevorzugt mit einem Winkel von 90° durchgeführt.

Für das Lagersystem ist wesentlich, daß. in den Regalgassen mehrere, einzelnen Ebenen der Regalreihen zugeordnete Führungen vorgesehen sind, daß auf den Führungen bewegbare Transporteinrichtungen vorgesehen sind, die zur Aufnahme von Lasten geeignet sind, und daß in Verbindung mit den Transporteinrichtungen eine Einrichtung zur seitlichen Verschiebung der Lasten in die Regale vorgesehen ist. Mit einem derartigen System kann eine vollautomatisierte Lagerhaltung betrieben werden. Zudem ist ein Rangieren in den Regalgassen nicht mehr notwendig, so daß die Regalgassen lediglich die Breite der zu transportierenden Lasten, also im wesentlichen die gleiche Breite wie die Regale selbst aufweisen müssen und das Gesamtlager entsprechend klein ist.

Die Einrichtung zur seitlichen Verschiebung der Lasten in die Regale wird bevorzugt von einer Hub- und Schubeinrichtung gebildet, die in der Lage ist, die zu verschiebende Last ein kurzes Stück, bevorzugt nur etwa 1 cm, anzuheben, so daß die Last in das Regal und auf dort angeordnete Tragholme eingeschoben werden kann. Nach Erreichen des Regals wird die Hub- und Schubeinrichtung abgesenkt, so daß die Last auf den Regalbodentragholmen ruht und die Hub- und Schubeinrichtung dann aus dem Regal wieder auf die Transporteinrichtung zurückgefahren werden kann. Der Antrieb der Hub- und Schubeinrichtung erfolgt dabei bevorzugt mit Zahnrädern und Zahnstangen oder mit einem Schneckenantrieb und einem Zahnkranz.

An den Enden der Regalreihen sind Hebeeinrichtungen vorgesehen, mit denen die Lasten zu den Führungen anhebbar sind. Diese Hebeeinrichtungen sind in der Art eines Fahrstuhls ausgeführt, der einen Boden aufweist, der günstigerweise identisch zu einem Regalboden ist, so daß der Boden nach Erreichen der Zielebene genau wie der übliche Regalzielort angesteuert werden kann. Bevorzugt ist an jeder Stirnseite eine Hebeeinrichtung vorgesehen. Bei einem geringeren Lagerumsatz ist auch denkbar, an jeder Regalgasse nur eine Hebeeinrichtung anzuordnen. Die Hebeeinrichtungen und die Transporteinrichtungen sind bevorzugt mit einem Zugsystem bewegbar, da diese besonders leicht handhabbar und energiesparend einsetzbar sind. Auf diese Weise können die Hebeeinrichtungen und die Transporteinrichtungen auch konstruktiv einfach ausgeführt werden und bei Bedarf leicht ausgetauscht werden. Alternativ kann auch jede Hebeeinrichtung und jede Transporteinrichtung mit einem eigenen hydraulischen Antrieb oder einem Motorantrieb bewegt werden. Insbesondere in den Regalreihen ist es günstig, die Transporteinrichtungen mit einem eigenen Motorantrieb auszurüsten, so daß dort die Transporteinrichtungen selbstfahrend ausgebildet sind und auch mehrere Transporteinrichtungen gleichzeitig gefahren werden können.

In einer bevorzugten Ausführungsform der Erfindung ist jeder Ebene der Regalreihen eine Mehrzahl von Regalelementen zugeordnet, wobei die Regalelemente die Führungen aufweisen, auf denen die Transporteinrichtungen bewegbar sind. Mit diesen Regalelementen steht ein standardisiertes Einbauelement zur Verfügung, das an den Regalreihen befestigt werden kann und modulartig in Regallagern beliebiger Größe eingesetzt werden kann.

Ein weiterer Aspekt der Erfindung besteht in der Bereitstellung von Transporteinrichtungen, Hub- und Schubeinrichtungen und Regalelementen zur Verwendung in einem derartigen erfindungsgemäßen Lagersystem zum Ein- und Auslagern von Lasten. Diese drei Elemente bilden den wesentlichen Bestandteil, mit dem sich nahezu jedes beliebige kommerzielle Regallager zu einem erfindungsgemäßen Regallager umrüsten läßt, womit erreicht wird, daß auf einer vergleichsweise sehr kleinen Fläche sehr große Stückzahlen gelagert und schnell und kostengünstig bewegt und transportiert werden können. Ein derartiges Lager kann auch vollautomatisch betrieben werden und durch die geringe Zahl von verschiedenen Elementen durch Austausch eventuell defekter Einheiten problemlos instand gehalten werden.

Bei derartigen Transporteinrichtungen ist es insbesondere günstig, daß diese Räder oder Rollen aufweisen, die eine an die Form der Führung angepaßte Lauffläche aufweisen, so daß die Transporteinrichtungen auf den Führungen sicher und zuverlässig entlanglaufen können. Insbesondere ist eine kreissegmentförmig ausgenommene Lauffläche in Verbindung mit einer rohrförmigen Führung günstig. Weiterhin ist die Transporteinrichtung bevorzugt so ausgestaltet, daß sie mit einer zweiten Transporteinrichtung koppelbar ist, so daß in den Regalgassen zwei miteinander verbundene Transporteinrichtungen angeordnet werden können, falls dies zum Ein- und Auslagern von Lasten an der gleichen Position erforderlich ist oder gewünscht wird.

Die Transporteinrichtungen können aber auch als Lagerplatten ausgebildet sein, die keine eigenen Räder aufweisen, sondern auf umlaufenden Bändern transportiert werden.

Die Hub- und Schubeinrichtung ist bevorzugt so ausgebildet, daß im unteren Bereich Laufräder angeordnet sind und eine nach oben wirkende Hubeinrichtung vorgesehen ist. Die Hubeinrichtung ist dabei bevorzugt mit Schnecken- und Zahnradgetriebe betrieben und ermöglicht einen präzisen Hub um wenige Millimeter, insbesondere um 9 mm. Mit den Laufrädern ist eine Bewegung senkrecht zur Regalgasse möglich, so daß die Hub- und Schubeinrichtung von dem in der Regalgasse laufenden Transportschlitten in die Regale bewegt werden kann. Der Antrieb in dieser Richtung erfolgt bevorzugt mit einem Zahnrad, das in eine auf dem Regalboden angeordnete Zahnstange eingreift. Besonders bevorzugt weist die Hubeinrichtung eine Mehrzahl von Hubstangen zum Anheben eines Hubteils auf, die jeweils abwechselnd mit einer Mehrzahl von Laufrädern in der Hub- und Schubeinrichtung vorgesehen sind. Durch eine derartige Anordnung wird der Regalboden zur Druckaufnahme genutzt, wodurch der besonders einfache Aufbau der Hub- und Schubeinrichtung ermöglicht wird, da kein Gegengewicht oder andere Elemente zur Aufnahme der Gewichtskraft notwendig sind.

Das Regalelement weist bevorzugt Befestigungselemente zum Anbau an zwei nebeneinander liegende Regalreihen auf. Dadurch überspannt das Regalelement eine Regalgasse und gewährleistet einen definierten Abstand zwischen zwei Regalreihen, wobei dieser Abstand nur der Breite der Regalreihe entsprechen muß, da die Last im Regal verschoben werden kann, ohne daß zusätzlicher Platz zum Rangieren benötigt würde. Weiterhin weist das Regalelement bevorzugt eine Strom- und Datenträgerschiene auf. An den Transporteinrichtungen und den Hub- und Schubeinrichtungen sind günstigerweise ebenfalls Abnehmer vorgesehen, die im Bedarfsfall dann die benötigten Steuerdaten und die für Bewegungen notwendige Energie erhalten. Insbesondere ist für den Einsatz der Hub- und Schubeinrichtung und für eine motorbetriebene Hubbewegung der Hub- und Schubeinrichtung die Stromzuführung günstig, da auf diese Weise die Hub- und Schubeinrichtung keine eigene Energiequelle aufweisen muß und daher leicht und konstruktiv einfach ausgestaltet werden kann. Die Führungen sind bevorzugt als Rohre ausgebildet, die ebenfalls in das Regalelement integriert sind. Diese Führungen bilden insgesamt eine Führungsbahn, auf der die Räder der Transporteinrichtungen entlanglaufen können. Die einzelnen Regalelemente weisen bevorzugt mindestens einen umlaufenden Kettenantrieb auf, in den die Transporteinrichtungen mit einem Halteelement oder Zugseil eingreifen können und so fortbewegt werden. Ergänzend sind zwei derartige Regalelemente mit einem weiteren umlaufenden Kettenantrieb verbunden, so daß in einer Regalgasse lediglich ein Antrieb vorhanden sein muß, mit dem sämtliche Kettenantriebe der einzelnen Regalelemente antreibbar sind. Einzelne Regalelemente sind dabei vorzugsweise 1,75 m lang und sind damit etwas größer als eine Standardlast, so daß insbesondere auf Lagerplatten transportierte Lasten abschnittsweise transportiert werden können und die Förderung abschnittsweise unterbrochen werden kann, so daß einzelne Lasten ein- oder ausgelagert werden können. Diese zuletzt genannte Ausführungsform wird bevorzugt ausschließlich im Bereich der Zuführung, also bei der Einlagerung und bei der Auslagerung zu dem Regalsystem eingesetzt.

Weiterhin ist bevorzugt in gleicher Weise ein dazu parallel angeordneter zweiter Kettenantrieb vorgesehen, der zum Antrieb der Transporteinrichtungen in die entgegengesetzte Richtung dient. Grundsätzlich ist jedoch auch ein durchgängiges Seil als Antrieb denkbar. Auch andere Antriebsmöglichkeiten, wie beispielsweise die Ausrüstung jeder Transporteinrichtung mit einem eigenen Motor, sind möglich.

Eine andere bevorzugte Antriebsmöglichkeit ist die Ausbildung von Förderbändern, auf die direkt Lagerplatten aufgelegt und von den Förderbändern transportiert werden. Derartige Förderbandabschnitte sind vorzugsweise 1,75 m lang, bestehen im wesentlichen aus Rollen, die durch Ketten verbunden sind und angetrieben werden, welche auf ihrem oberen Teil den Transport der aufstehenden Last vornehmen. Die Rollen sind in ihrer Breite veränderbar und können den jeweiligen Breiten der zu transportierenden Lasten angepaßt werden.

Nachfolgend wird die Erfindung anhand eines in der Zeichnung darstellten Ausführungsbeispiels weiter erläutert. Im einzelnen zeigen die schematischen Darstellungen in:
- Fig. 1:: Eine Übersicht über ein erfindungsgemäßes Lagersystem;
- Fig. 2:: eine Draufsicht auf einen Teil eines erfindungsgemäßen Lagersystems;
- Fig. 3:: eine Seitenansicht eines Teils eines erfindungsgemäßen Lagersystems;
- Fig. 4:: eine Draufsicht auf eine Hub- und Schubeinrichtung in dem Lagersystem;
- Fig. 5:: eine Querschnittsansicht durch eine Hub- und Schubeinrichtung gemäß Fig. 4;
- Fig. 6:: eine geschnittene Seitenansicht eines Ausschnitts eines Hub- und Schubelementes und
- Fig. 7:: eine geschnittene Seitenansicht eines Regalelements eines erfindungsgemäßen Lagersystems.

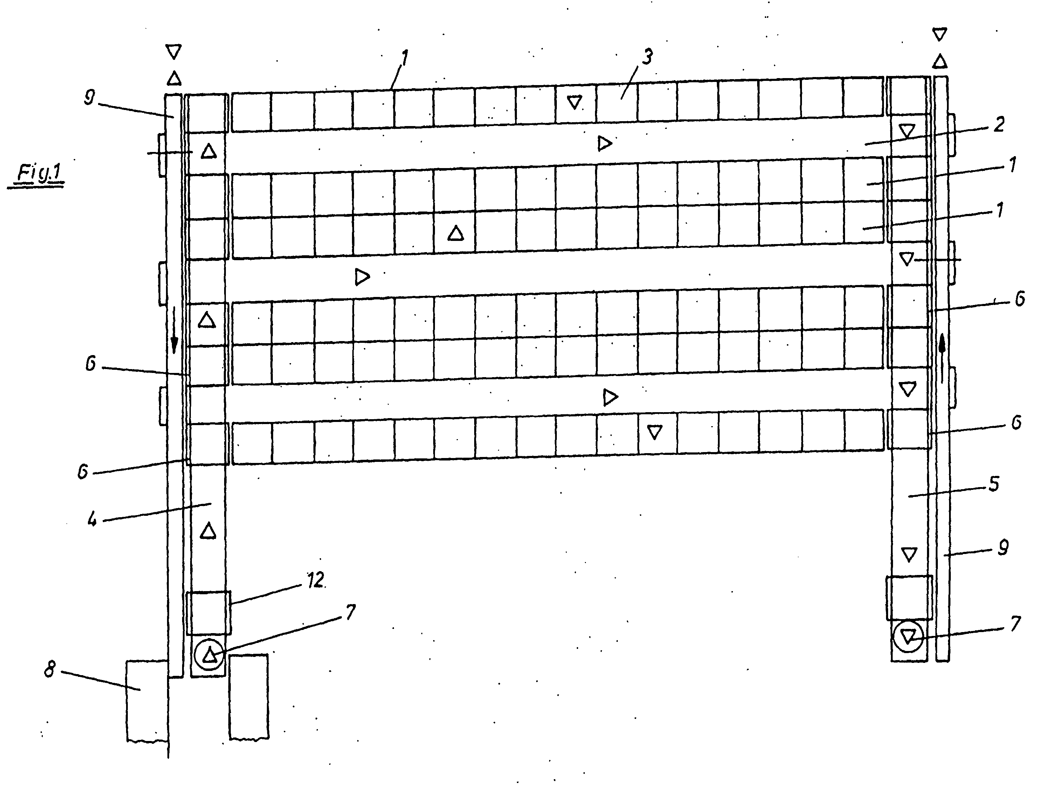

In Fig. 1 ist eine schematische Gesamtansicht eines erfindungsgemäßen Lagersystems dargestellt, das im gezeigten Ausführungsbeispiel sechs Regalreihen 1 und drei Regalgassen 2 aufweist. Die einzelnen Regalreihen 1 weisen mehrere Regalebenen und verschiedene Regalfächer 3 auf, die in der Zeichnung angedeutet sind. Die Regalreihen sind gerade und parallel zueinander ausgerichtet. Im rechten Winkel zu den Regalreihen ist eine Einlagerungsbahn 4 und eine Auslagerungsbahn 5 vorgesehen, die jeweils entlang der Stirnseiten der Regalreihen 1 verlaufen. Es wäre auch möglich, mit nur einer Einlagerungs- und Auslagerungsbahn zu arbeiten, jedoch ist bei der Verwendung von zwei getrennten Bahnen ein höherer Lagerumsatz möglich. Auf der Einlagerungsbahn 4 laufen Transporteinrichtungen mit der einzulagernden Last bis zu einem der Senkrechtförderer 6, die jeweils an den Stirnseiten der Regalreihen 1 angeordnet sind und insofern auf der Einlagerungsbahn 4 und der Auslagerungsbahn 5 stehen. Weiterhin ist ein Zentrier- und Erfassungspunkt 7, eine LKW-Ent- und Beladestation 8 und ein Rücklaufband 9 vorgesehen.

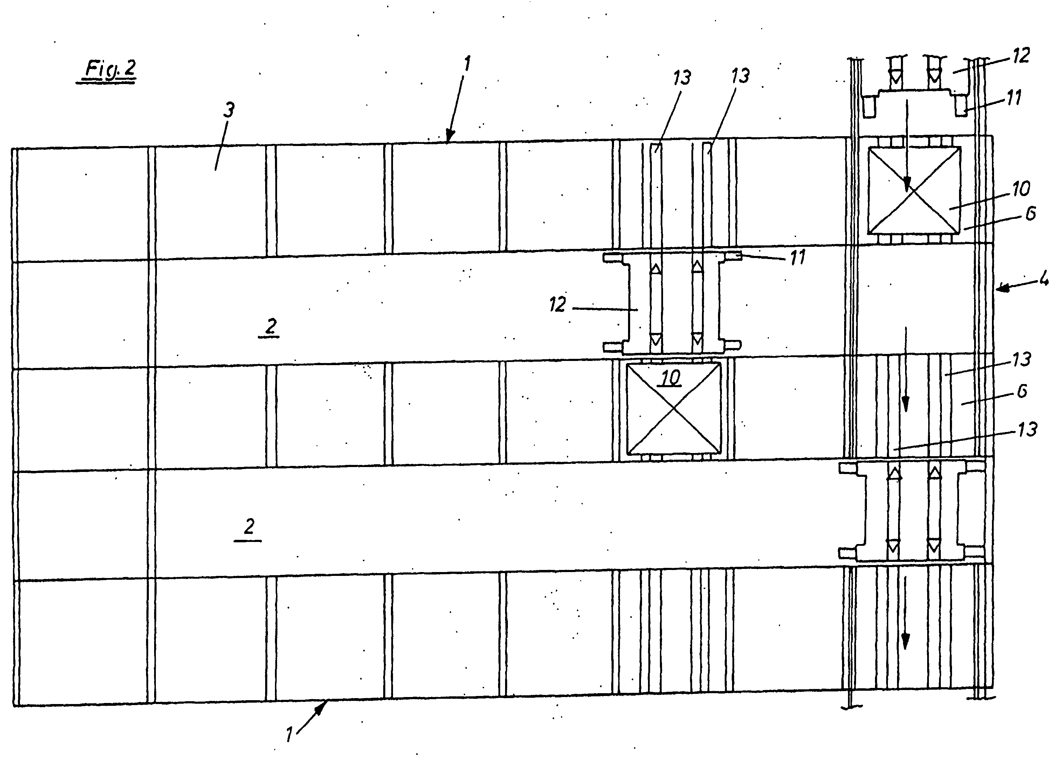

In Fig. 2 ist am rechten Bildrand eine Einlagerungsbahn 4 dargestellt, von der aus sich im rechten Winkel die Regalreihen 1 und die Regalgassen 2 erstrecken. An den Stirnseiten der Regalreihen 1 sind Hebeeinrichtungen vorgesehen, die von den Senkrechtfördern 6 gebildet werden. In den Regalgassen 2 sind in jeder Regalebene Transporteinrichtungen 11 auf hier nicht dargestellten Führungen hin- und herbewegbar. Auf diesen Transporteinrichtungen 11 ist eine Hub- und Schubeinrichtung 12 angeordnet, auf der Lasten 10 abgesetzt werden können und dann in einem der Regalfächer 3 auf Regalbodentragholmen 13 abgesetzt werden können.

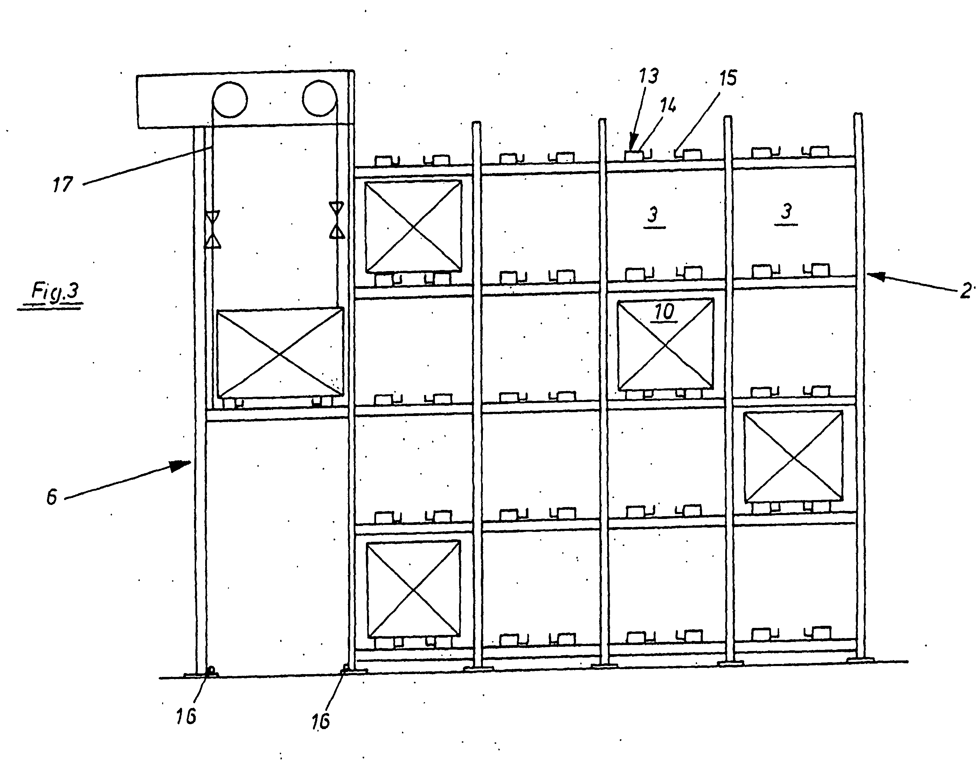

In Fig. 3 ist eine Regalreihe 1 mit einer Vielzahl von Regalfächern 3 in einer Seitenansicht dargestellt. In jedem der Regalfächer 3 sind zwei Regalbodentragholme 13 angeordnet, die im wesentlichen aus einem Verstärkungsprofil 14 und einer Laufradbahn 15 bestehen. Die Verstärkungsprofile 14 dienen zur Aufnahme der Lasten 10, wobei in einem Regalfach 3 zwei Regalbodentragholme 13 vorgesehen sind, die einen Abstand zueinander aufweisen, der kleiner ist als die Breite der abzulegenden Lasten. Da es sich um Lasten mit genormten Abmessungen handelt, kann das Regallager und damit auch der Abstand der beiden Regalbodentragholme 13 standardisiert ausgeführt werden. An der linken Stirnseite der Regalreihe 2 ist ein Senkrechtförderer 6 vorgesehen, der im dargestellten Ausführungsbeispiel im wesentlichen einen Boden mit zwei Regalbodentragholmen 13 aufweist und mit einem Seilzug 17 auf und ab bewegbar ist. Am Boden des Senkrechtförderers 6 sind Führungen 16 vorgesehen, die Teil der Einlagerungsbahn 4 sind.

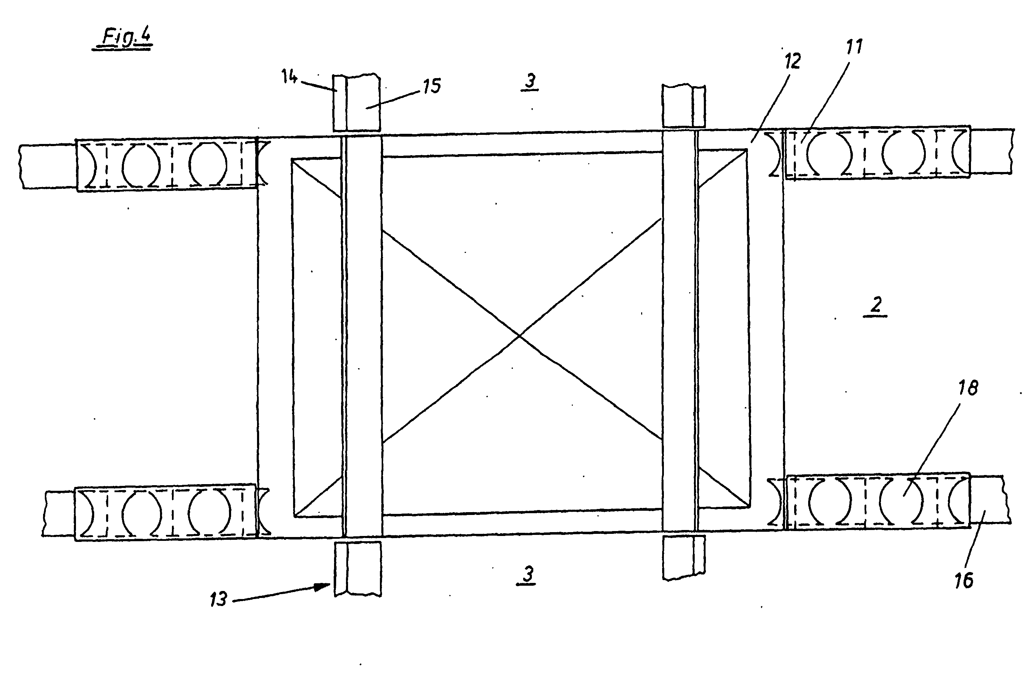

In Fig. 4 ist eine Regalgasse 2 dargestellt, an die sich rechts und links - bzw. in der Zeichnung oben und unten - Regalreihen mit Regalfächern 3 anschließen. In der Regalgasse 2 sind dicht benachbart zu den Regalreihen 1 Führungen 16 angeordnet, auf denen eine Transporteinrichtung 11 auf Rollen 18 entlangläuft.

Die Transporteinrichtung 11 kann auch als Transportwagen oder Transportschlitten ausgeführt sein. Um das Gewicht der aufgenommenen Last besser zu verteilen und einen möglichst reibungsarmen Lauf der Transporteinrichtung zu gewährleisten, sind eine Vielzahl von Rollen 18 vorgesehen, auf denen die Transporteinrichtung auf den Führungen 16 entlangläuft. Die Führungen 16 bilden eine Führungsbahn, die sich über die gesamte Regalgasse bis vor die Senkrechtförderer 6 erstreckt. Auf der Transporteinrichtung 11 ist eine Hub- und Schubeinrichtung 12 angeordnet, die in der dargestellten Position genau vor einem Regalfach 3 positioniert ist, so daß die Laufräder der Hub- und Schubeinrichtung 12 genau vor dem Regalbodentragholm 13, genauer gesagt vor der Laufradbahn 15 der Regalbodentragholme 13 positioniert ist. Aus dieser Position kann das Hub- und Schubelement 12 wahlweise in eines der beiden angrenzenden Regalfächer 3 einfahren und die aufgenommene Last dort absetzen oder eine dort gelagerte Last aufnehmen.

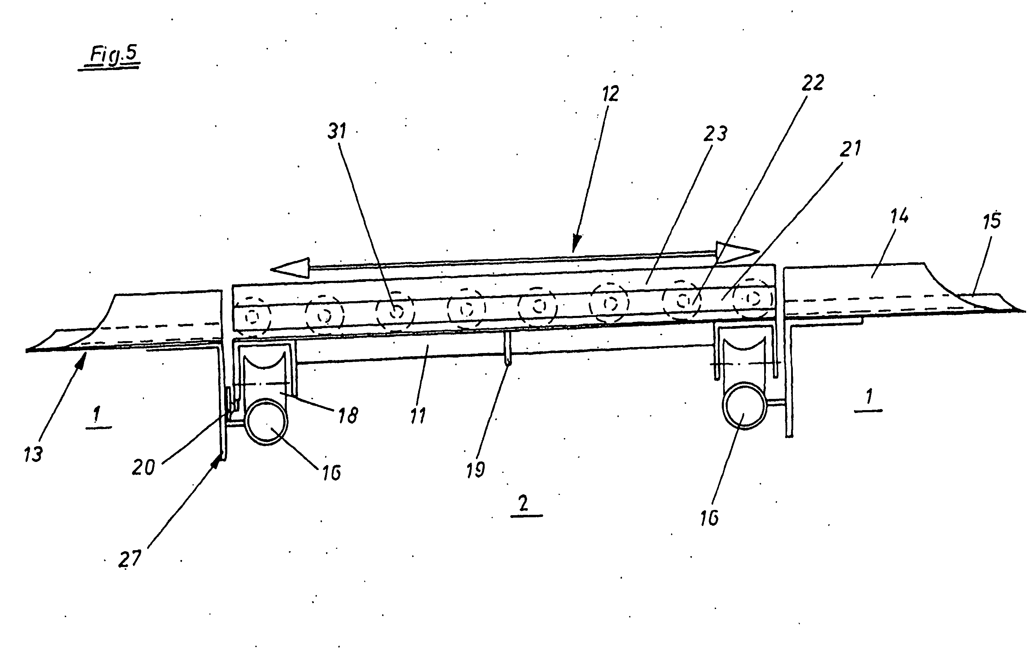

In Fig. 5 ist ein Querschnitt durch eine Hub- und Schubeinrichtung dargestellt, die sich an einer ähnlichen Position befindet wie die in Fig. 4 dargestellte. Die Transporteinrichtung 11 und die Hub- und Schubeinrichtung 12 befinden sich in einer Regalgasse 2, an die sich rechts und links Regalreihen 1 anschließen. An den Regalreihen 1 sind Führungen 16 befestigt, die einen kreisförmigen Querschnitt aufweisen und auf denen die Rollen 18 der Transporteinrichtung 11 laufen. Die Rollen 18 weisen eine kreissegmentförmig ausgenommene Lauffläche auf, die mit der Oberfläche der im Querschnitt kreisförmigen Führung 16 korrespondiert, so daß eine besonders sichere Führung der Transporteinrichtung gewährleistet ist. Die Transporteinrichtung 11 weist ein Zugteil 19 auf, das zur Aufnahme eines Seils oder einer Kette dient, womit der Transportschlitten 11 entlang der Regalgasse 2 bewegt werden kann. Weiterhin ist in diesem Bereich eine Strom- und Datenträgerschiene 20 vorgesehen, über die Steuerbefehle und elektrische Energie zu der Transporteinrichtung 11 und zu der Hub- und Schubeinrichtung 12 geführt werden. Die Hub- und Schubeinrichtung 12 weist einen Tragrahmen 21 auf, an dem eine Mehrzahl von Laufrädern 22 befestigt sind, auf denen die Hub- und Schubeinrichtung 12 nach links und rechts bewegbar ist. Insgesamt weist die Hub- und Schubeinrichtung 12 zwei parallele Reihen solcher Laufräder 22 auf, die so weit voneinander beabstandet sind, daß ihr Abstand mit dem Abstand zweier Regalbodentragholme 13 korrespondiert. Weiterhin weist die Hub- und Schubeinrichtung 12 ein Hubteil 23 auf, das um wenige Millimeter anhebbar oder absenkbar ist, so daß die Oberseite des Hubteils 23 gerade etwas höher als das Verstärkungsprofil 14 oder etwas niedriger als das Verstärkungsprofil 14 des Regalbodentragholms 13 angeordnet ist. Auf diese Weise kann das Hub- und Schubelement 12 bei angehobenem Hubteil 23 mit einer Last in ein Regalfach einfahren, sich dann absenken und ohne die Last wieder auf die Transporteinrichtung 11 zurückfahren, wobei die Last auf dem Verstärkungsprofil 14 des Regalbodentragholms 13 verbleibt.

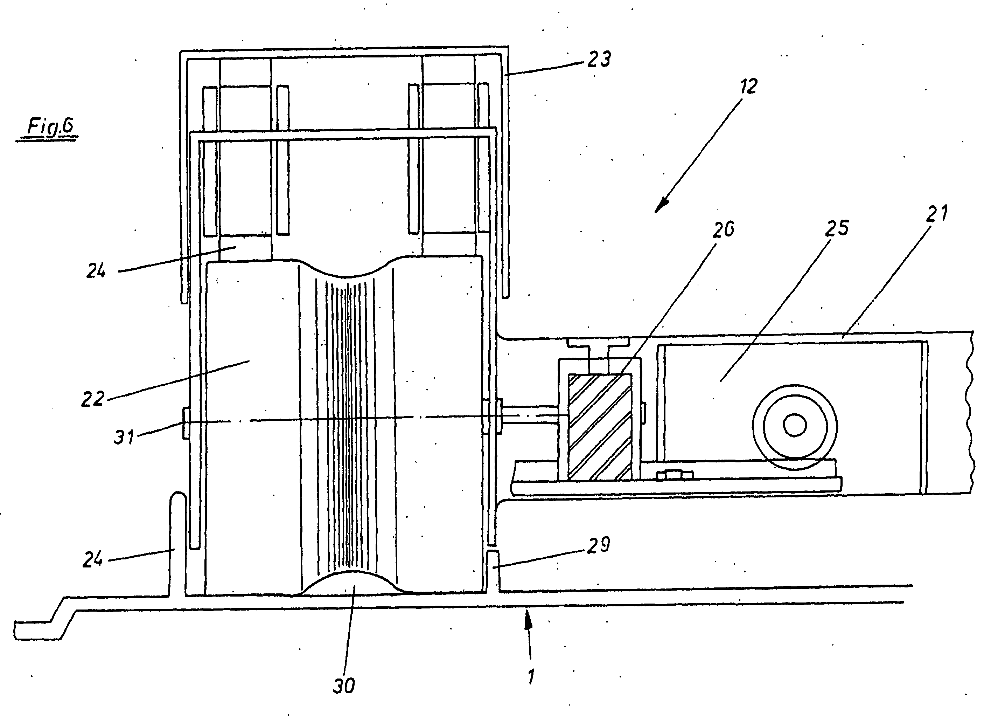

In Fig. 6 ist eine geschnittene Querschnittsansicht durch einen Teil der Hub- und Schubeinrichtung 12 dargestellt. Die Laufräder 22 der Hub- und Schubeinrichtung 12 laufen in zwei seitlichen Begrenzungen 29 der Transporteinrichtung 11. Ergänzend weist das Laufrad 22 im zentralen Bereich der Lauffläche eine Ausnehmung auf, die mit einem Vorsprung 30 am Boden der Transporteinrichtung 11 korrespondiert. Das Laufrad 22 wird von einer Achse 31 getragen, die an dem Tragrahmen 21 der Hub- und Schubeinrichtung 12 befestigt ist. In dem Tragrahmen 21 ist ein Motor 25 vorgesehen, der mit einem Schnecken- und Zahnradantrieb 26 oder mit einem Zahnrad und einer Zahnstange eine Hubstange 24 betätigt, mit der das Hubteil 23 präzise anhebbar ist. Die Hubstange 24 ist in der Figur hinter dem Laufrad 22 angeordnet. Hinter dieser Hubstange 24 ist ein weiteres Laufrad 22 vorgesehen und dann erneut eine weitere Hubstange 24. Das Laufrad 22 kann ebenfalls mit einem in dem Tragrahmen 21 angeordneten Motor angetrieben werden, so daß der Antrieb über die Laufräder 22 erfolgt. Alternativ kann auch ein Zahnrad angetrieben werden, das in eine auf dem Boden befindliche Zahnstange eingreift und auf diese Weise die Hub- und Schubeinrichtung 12 vorbewegt.

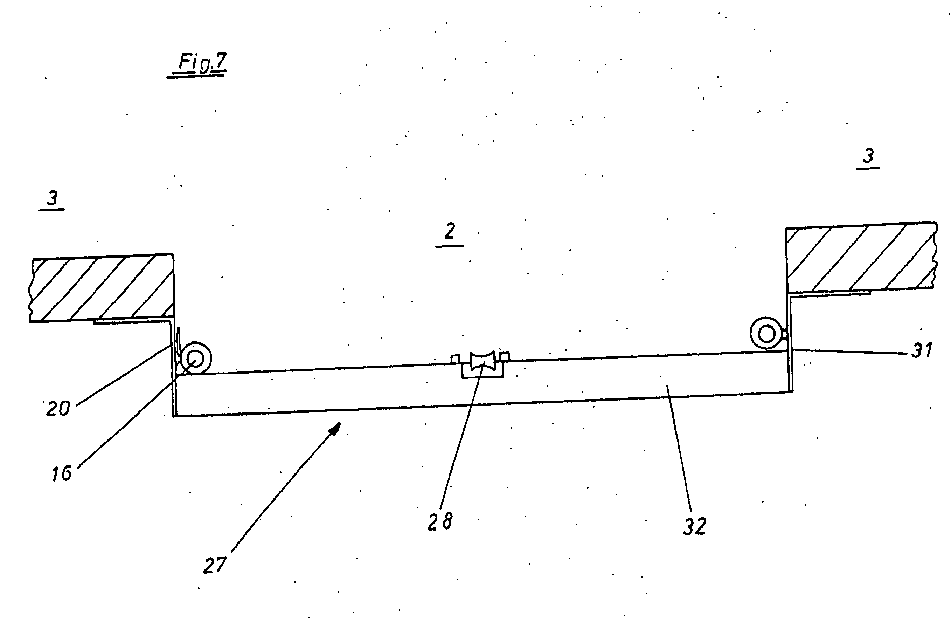

In Fig. 7 ist ein Querschnitt durch ein Regalelement 27 dargestellt, das eine Regalgasse 2 überspannt und an den Regalfächern 3 oder den Regalreihen 1 befestigt ist. Das Regalelemente 27 kann auch als Regalgassenelement bezeichnet werden. Das Regalelement 27 weist im wesentlichen Querstreben 32 auf und ist mit Befestigungswinkeln 31 an den Regalreihen 1 befestigt. Auf diese Weise wird ein definierter Abstand zwischen den Regalreihen 1 gewährleistet. An dem Regalelement 27 sind die Führungen 16 befestigt, die die Führungsbahn für die Transporteinrichtungen 11 bilden. Weiterhin weist das Regalelement 27 die Daten- und Stromträgerschiene auf. Im zentralen Bereich der Querverstrebung 32 ist eine Antriebseinrichtung 28 dargestellt, mit der die Transporteinrichtungen 11 antreibbar sind. Hier kann insbesondere ein umlaufender Kettenantrieb vorgesehen sein, in den das Zugteil 19 der Transporteinrichtung 11 eingreifen kann.

Das oben beschriebene Lagersystem arbeitet wie folgt:
In der in Fig. 1 dargestellten LKW-Be- und Entladestation 8 werden von einer Rampe mit Hub- und Schubeinrichtungen 12 die Lasten aus dem LKW entnommen. Das Be- und Entladen der Lkws wird also mit denselben Elementen durchgeführt, die auch zum Be- und Entladen des Regallagers verwendet werden. Auf diese Weise wird das Be- und Entladen der Lkws in das Gesamtsystem eingebunden. Bei den Lasten kann es sich um Paletten, Kollis und andere Lasten handeln. Diese werden auf dem Zentrier- und Erfassungspunkt 7 abgesetzt, an dem eine automatische Erfassung erfolgt. Mit einer EDV-Steuerung wird der Last ein bestimmter Lagerplatz bzw. ein Regalfach 3 zugeordnet, das sich nach den Abmessungen, dem Gewicht und der Höhe der Last richtet. Das direkt vor dem Zentrier- und Erfassungspunkt 7 befindliche Hub - und Schubelement 12 nimmt die Last auf und fährt bis zu einer Regalgasse 2, so daß die Hub- und Schubeinrichtung 12 mit der darauf befindlichen Last direkt vor einer abgesenkten Hebeeinrichtung positioniert ist. Die übrigen Senkrechtförderer 6, die im Moment nicht beladen werden sollen, sind in einer Art Wartestellung in der Höhe der ersten oder zweiten Regalebene, so daß die Transporteinrichtungen auf der Einlagerungsbahn 4 ungehindert bis zu dem gewünschten Senkrechtförderer 6 durchfahren können, der bis zum Boden abgesenkt ist. Zusätzlich oder alternativ sind die in dem Senkrechtförderer 6 vorgesehenen Tragholme seitlich nach Außen verschiebbar. Dadurch wird ein Durchlaßmaß erreicht, das die Horizontalbewegung der auf der Einlagerungsbahn befindlichen Transporteinrichtungen ermöglicht. Insgesamt wird dadurch ein störungsfreier Betrieb im Bodenniveau ermöglicht. Die Hub- und Schubeinrichtung 12 fährt nun auf den Boden der Hebeeinrichtung oder des Senkrechtförderes 6 vor und setzt die Last in dem Senkrechtförderer 6 ab, so daß die Last direkt an der Stirnseite einer Regalreihe 1 positioniert ist. Das Hub- und Schubteil 12 senkt sich dann ab und fährt ein Stück zurück, so daß der Senkrechtförderer 6 dann vertikal mit Hilfe des Seilzugs 17 nach oben bewegt werden kann. Alternativ können die Einlagerungsbahn 4 und die Auslagerungsbahn 5 auch ausschließlich mit Transporteinrichtungen ohne die darauf aufgesetzten Hub- und Schubeinrichtungen betrieben werden. In so einem Fall muß die Hebeeinrichtung 6 bis zu einem Niveau etwas unterhalb der Einlagerungsbahn 4 abgesenkt werden, so daß die Transporteinrichtung über den abgesenkten Senkrechtförderer 6 fahren kann und der Senkrechtförderer 6 beim Hochfahren die Last aufnehmen kann. Das Hub- und Schubteil 12 fährt dann auf der Einlagerungsbahn 4 weiter bis zum Ende und wird dann mit einer Rückführung 9 zurück zum Zentrier- und Erfassungspunkt 7 gebracht. Aus Gründen der Platzersparnis kann die Rückführung 9 so ausgebildet sein, daß das auf der Rückführung 9 immer leere Hub- und Schubteil 12 in einer senkrechten Stellung zurückgeführt wird. Der Senkrechtförderer 6 bewegt die Last 10 bis in die gewünschte Zielebene. In dieser Zielebene fährt dann eine Transporteinrichtung, deren Ruheposition günstigerweise ungefähr in der Mitte einer Regalgasse 2 ist, bis direkt vor den Senkrechtförderer 6. Die Hub- und Schubeinrichtung 12 fährt dann im abgesenkten Zustand unter die Last 10, wobei dann das Hubteil 23 der Hub- und Schubeinrichtung nach oben fährt und die Last von den Regalbodentragholmen 13 abhebt. Das Hub- und Schubelement 12 fährt dann zurück in die Regalgasse auf die Transporteinrichtung 11. Die Transporteinrichtung 11 fährt dann die Regalgasse entlang bis zu dem Zielort, also insbesondere einem Regalfach 3. In dieses Regalfach 3 wird dann die Last 10 mit Hilfe des Hub- und Schubelements 12 eingeführt, indem das Hub- und Schubelement 12 bei angehobenen Hubteil 23 in das Regalfach einfährt und dann das Hubteil 23 abgesenkt wird, so daß die Last 10 auf die Regalbodentragholme abgesetzt wird. Wenn die Last 10 an einer Position eingelagert werden soll, an der bereits eine Last gelagert ist, so werden zwei miteinander verbundene Transporteinrichtungen 11 mit darauf angeordneten Hub- und Schubeinrichtungen 12 in Bewegung gesetzt und die freie Hub- und Schubeinrichtung nimmt die Last auf und fährt um die Breite eines Regalfachs 3 zur Seite, so daß die andere Transporteinrichtung mit der einzulagernden Last vor das dann freigewordene Regalfach fahren kann. Das Auslagern einer Last erfolgt in analoger Weise über die in Figur 1 rechts angeordneten Senkrechtförderer 6 und die Auslagerungsbahn 5.

Das ganze Lagersystem kann vollautomatisch per EDV gesteuert werden und ist durch den Einsatz baugleicher Elemente konstruktiv besonders einfach herstellbar und zudem besonders einfach zu warten. Zu den bekannten Komponenten eines Lagersystems müssen lediglich die Regalelemente hinzugefügt werden, die einerseits die Einlagerungsbahn 4 und die Auslagerungsbahn 5 und andererseits die Führungen in den Regalgassen in den verschiedenen Regalebenen bilden. Auf diesen Bahnen bewegen sich die Transporteinrichtungen 11 zusammen mit den Hub- und Schubeinrichtungen 12. Auf der Einlagerungsbahn 4 sind die Transporteinrichtung 11 und die Hub- und Schubeinrichtung 12 so übereinander positioniert, daß beide die gleiche Laufrichtung haben, während in den Regalgassen 2 die Hub- und Schubeinrichtung 12 so auf der Transporteinrichtung 11 positioniert wird, daß deren Bewegungsrichtungen um 90° zueinander gedreht sind. Weiterhin müssen nur die Senkrechtförderer 6 ergänzt werden, deren Boden baugleich zu den Böden der Regalfächern 3 ist. Durch das erfindungsgemäße Verfahren und das erfindungsgemäße Lagersystem ergeben sich gegenüber herkömmlichen Lagersystemen wesentliche Vorteile bei der Raumnutzung und in der Energie- und Kostenersparnis. Die Vorteile bei der Raumnutzung entstehen im wesentlichen dadurch, daß die Regalgassen sehr schmal gehalten werden können, da Rangierbewegungen in den Regalgassen nicht mehr notwendig sind. Auch die einzelnen Regalebenen können im wesentlichen der Höhe der einzulagernden Lasten entsprechen, da die Lasten auf den Transporteinrichtungen absolut horizontal gelagert sind und gerade in die Regalreihen und Regalfächer eingeschoben werden können. Demgegenüber arbeiten beispielsweise Gabelstapler mit angekippten Tragelementen, so daß die Lasten winklig in die Regalreihen eingeführt werden, so daß eine größere Höhe benötigt wird. Bei einer solchen Handhabung werden die Lasten oder die darunter angeordneten Paletten auch zumeist beschädigt. Modellrechnungen haben ergeben, daß das erfindungsgemäße Lagersystem mit einem wesentlich niedrigeren Energieaufwand betrieben werden kann, als dies bei herkömmlichen Systemen möglich ist. Dies resultiert im wesentlichen aus der Tatsache, daß die Lasten mit den Senkrechtförderern in vertikaler Richtung befördert werden und letztendlich mit der Hub- und Schubeinrichtung in das Regal gehoben werden müssen und im Gegensatz zu bekannten Systemen keine großen Lasten der Hebesysteme selbst mitbefördert werden müssen. Eine betriebswirtschaftlich Kalkulation hat gezeigt, daß derartige erfindungsgemäße Lagersysteme mit einem Bruchteil der Kosten betrieben werden können, die für den Betrieb eines bekannten Lagersystems notwendig sind.

## Patentansprüche

1. Verfahren zum Ein- und Auslagern von Lasten in einem Regallager mit mehreren Regalreihen (1) und zwischen den Regalreihen (1) befindlichen Regalgassen (2), wobei in dem Regallager mehrere in der Art eines Fahrstuhls ausgeführte Senkrechtförderer vorgesehen sind, die jeweils an den Stirnseiten der Regalreihen angeordnet sind, mit den Schritten:
a) daß eine Last (10) auf einer Einlagerungsbahn (4), die entlang der Stirnseite der Regalreihen (1) verläuft, bis zu einem Senkrechtförderer (6) befördert wird, wobei die übrigen Senkrechtförderer (6), die in dem Moment nicht beladen werden sollen, in einer Art Wartestellung sind, so daß die Last ungehindert bis zu dem gewünschten Senkrechtförderer (6) durchfahren kann,
b) daß die Last (10) an der Stirnseite der Regalreihe (1) in vertikaler Richtung mit einem Senkrechtförderer (6) in eine Zielebene gefördert wird,
c) daß die Last in der Zielebene in horizontaler Richtung in die Regalgasse befördert wird, wobei die Last im Senkrechtförderer (6) so behandelt und transportiert wird wie eine Last im Regal, d. h. als wäre sie bereits im Regal und müßte nur aus dem Regalfach entnommen werden, in der Regalgasse transportiert und an einer gewünschte Stelle wieder in das Regal eingeführt werden,
d) daß die Last (10) in horizontaler Richtung in der Regalgasse (2) bis zu einem Zielort in der entsprechenden Zielebene befördert wird und
e) daß die Last (10) in horizontaler Richtung aus der Regalgasse (2) in das Regal befördert wird.

2. Verfahren nach Anspruch 1,
**dadurch gekennzeichnet,**
**daß** beim Auslagern von Lasten (10) die Schritte a) bis e) in entsprechend umgekehrter Reihenfolge durchgeführt werden.

3. Verfahren nach einem der Ansprüche 1 oder 2,
**dadurch gekennzeichnet,**
**daß** jeder Richtungswechsel bei der Beförderung der Last (10) mit einem Winkel von 90° durchgeführt wird.

4. Lagersystem zum Ein- und Auslagern von Lasten in einem Regallager mit mehreren Regalreihen (1) und zwischen den Regalreihen (1) befindlichen Regalgassen (2), wobei eine Einlagerungsbahn (4), die entlang der Stirnseiten der Regalreihen (1) verläuft, vorgesehen ist, in den Regalgassen (2) mehrere, einzelnen Ebenen der Regalreihen zugeordnete Führungen (16) vorgesehen sind, auf den Führungen (16) bewegbare Transporteinrichtungen (11) vorgesehen sind, die zur Aufname von Lasten (10) geeignet sind, in Verbindung mit den Transporteinrichtungen (11) eine Einrichtung zur seitlichen Verschiebung der Lasten in die Regale vorgesehen ist und in der Art eines Fahrstuhls ausgeführte Senkrechtförderer (6) vorgesehen sind, die über die Einlagerungsbahn (4) erreichbar sind und ein Durchfahren der Transporteinrichtungen (11) auf der Einlagerungsbahn erlauben, insbesondere zur Durchführung des Verfahrens nach einem der Patentansprüche 1 bis 3,
**dadurch gekennzeichnet,**
**daß** die Senkrechtförderer (6) so an den Stirnseiten der Regalreihen (1) angeordnet sind, daß eine Last im Senkrechtförderer so handhabbar ist wie eine Last im Regal, wobei in dem Regallager mehrere Senkrechtförderer entlang der Einlagerungsbahn (4) vorgesehen sind.

5. Lagersystem nach Anspruch 4,
**dadurch gekennzeichnet,**
**daß** der Boden des Senkrechtförderers (6) identisch zum Regalboden ist, so daß der Boden nach Erreichen der Zielebene genau wie der übliche Regalzielort zum Aufnehmen oder Absetzen einer Last angesteuert werden kann.

6. Lagersystem nach Anspruch 5,
**dadurch gekennzeichnet,**
**daß** die Einrichtung zur seitlichen Verschiebung der Lasten in die Regale von einer Hub- und Schubeinrichtung (12) gebildet ist.

7. Lagersystem nach einem der Ansprüche 4 bis 6,
**dadurch gekennzeichnet,**
**daß** an den Enden der Regalreihen (2) Hebeeinrichtungen vorgesehen sind, mit denen die Lasten zu den Führungen (16) anhebbar sind.

8. Lagersystem nach einem der Ansprüche 4 bis 7,
**dadurch gekennzeichnet,**
**daß** jeder Ebene der Regalreihen (1) eine Mehrzahl von Regalelementen (27) zugeordnet ist und daß die Führungen (16) in die Regalelemente (27) integriert sind.

9. Lagersystem nach einem der Ansprüche 4 bis 8,
**dadurch gekennzeichnet,**
**daß** die Hebeeinrichtungen und die Transporteinrichtungen mit Zugsystemen bewegbar sind.

10. Lagersystem nach einem der Ansprüche 4 bis 9,
**dadurch gekennzeichnet,**
**daß** in den Regalgassen (2) zwei miteinander verbundene Transporteinrichtungen (11) vorgesehen sind.

11. Lagersystem nach einem der Ansprüche 4 bis 10,
**dadurch gekennzeichnet,**
**daß** die Transporteinrichtung (11) Rollen (18) aufweist, die eine an die Form der Führung angepaßte Lauffläche aufweisen.

12. Lagersystem nach einem der Ansprüche 4 bis 11,
**dadurch gekennzeichnet,**
**daß** das Lagersystem eine Hub- und Schubeinrichtung aufweist, die im unteren Bereich Laufräder (22) und eine nach oben wirkende Hubeinrichtung aufweist, so daß Lasten angehoben werden können und die Gewichtskraft auf den Boden wirkt.

13. Lagersystem nach Anspruch 12,
**dadurch gekennzeichnet,**
**daß** die Hub- und Schubeinrichtung (12) mehrere Hubstangen (24) zum Anheben eines Hubteils (23) aufweist, die im Bereich der Laufräder (22) vorgesehen sind.

## Claims

1. A method for loading and unloading loads in storage shelving with a plurality of rows of shelves (1) and shelf aisles (2) located between the rows of shelves (1), wherein a plurality of vertical conveyors executed in the fashion of an elevator are provided in the storage shelving, which are in each case arranged on the front sides of the rows of shelves, comprising the steps:
a) that a load (10) is conveyed on a loading track (4), which runs along the front sides of the rows of shelves (1), as far as a vertical conveyor (6) wherein the remaining vertical conveyors (6) which are not to be loaded at the moment, are in a type of waiting position so that the load can travel unhindered as far as the desired vertical conveyor (6),
b) that the load (10) on the front side of the row of shelves (1) is conveyed vertically with a vertical conveyor (6) into a target level,
c) that the load in the target level is conveyed horizontally into the shelf aisle, wherein the load in the vertical conveyor (6) is handled and transported like a load in the shelf, i.e., as if it were already in the shelf and merely needed to be removed from the shelf compartment, transported in the shelf aisle and inserted at a desired position back into the shelf,
d) that the load (10) is conveyed horizontally in the shelf aisle (2) as far as a target site in the corresponding target level and
e) that the load (10) is conveyed horizontally from the shelf aisle (2) into the shelf.

2. The method according to claim 1,
**characterised in**
**that** during the unloading of loads (10) from storage, steps a) to e) are carried out in the correspondingly reverse order.

3. The method according to any one of claims 1 or 2,
**characterised in**
**that** each change in direction during the conveyance of the load (10) is executed at an angle of 90°.

4. A storage loading system for loading and unloading loads in storage in storage shelving with a plurality of rows of shelves (1) and shelf aisles (2) located between the rows of shelves (1), wherein a loading track (4) which runs along the front sides of the rows of shelves (1) is provided, a plurality of guides (16) associated with individual levels of the rows of shelves are provided in the shelf aisles (2), transport devices (11) movable on the guides (16), which are suitable for receiving loads (10), are provided, in conjunction with the transport devices (11) a device is provided for lateral displacement of the loads into the shelves and vertical conveyors (6) executed in the fashion of an elevator are provided which can be reached via the loading track (4) and allow the transport devices (11) to travel through on the loading track, especially to implement the method according to any one of claims 1 to 3,
**characterised in**
**that** the vertical conveyors (6) are arranged on the front sides of the rows of shelves (1) such that a load in the vertical conveyor can be handled like a load in the shelf, wherein a plurality of vertical conveyors are provided along the loading track (4) in the storage shelving.

5. The storage loading system according to claim 4,
**characterised in**
**that** the bottom of the vertical conveyor (6) is identical to the bottom of the shelf so that after reaching the target level, the bottom can be controlled precisely like the usual shelf target site for picking up or putting down a load.

6. The storage loading system according to claim 5,
**characterised in**
**that** the device for lateral displacement of the loads into the shelves is formed by a lifting and pushing device (12).

7. The storage loading system according to any one of claims 4 to 6,
**characterised in**
**that** at the ends of the rows of shelves (2) lifting devices are provided with which the loads can be lifted to the guides (16).

8. The storage loading system according to any one of claims 4 to 7,
**characterised in**
**that** a plurality of shelf elements (27) is associated with each level of the rows of shelves (1) and that the guides (16) are integrated into the shelf elements (27).

9. The storage loading system according to any one of claims 4 to 8,
**characterised in**
**that** the lifting devices and the transport devices are movable with tension systems.

10. The storage loading system according to any one of claims 4 to 9,
**characterised in**
**that** two interconnected transport devices (11) are provided in the shelf aisles (2).

11. The storage loading system according to any one of claims 4 to 10,
**characterised in**
**that** the transport device (11) has rollers (18) which have a running surface matched to the shape of the guide.

12. The storage loading system according to any one of claims 4 to 11,
**characterised in**
**that** the storage loading system has a lifting and pushing device which has running wheels (22) in the lower area and an upwardly acting lifting device so that loads can be raised and the weight force acts on the bottom.

13. The storage loading system according to claim 12,
**characterised in**
**that** the lifting and pushing device (12) has a plurality of lifting rods (24) for lifting a lifting section (23) which are provided in the area of the running wheels (22).

## Revendications

1. Procédé pour stocker et déstocker des charges dans un entrepôt à rayonnages comprenant plusieurs rangées de rayonnages (1) et des allées (2) situées entre celles-ci, selon lequel on prévoit dans l'entrepôt plusieurs convoyeurs verticaux qui sont réalisés à la manière d'un ascenseur et qui sont disposés sur les côtés frontaux des rangées de rayonnages, comprenant les étapes suivantes :
a) une charge (10) est amenée jusqu'à un convoyeur vertical (6) sur une voie de stockage (4) qui longe le côté frontal des rangées de rayonnages (1), les autres convoyeurs verticaux (6) qui ne doivent pas être chargés pour le moment étant dans une sorte de position d'attente, de sorte que la charge peut arriver sans obstacle jusqu'au convoyeur vertical (6) voulu,
b) la charge (10) située sur le côté frontal de la rangée (1) est amenée dans le sens vertical jusqu'à un plan de destination à l'aide d'un convoyeur vertical (6),
c) la charge située dans le plan de destination est acheminée dans le sens horizontal dans l'allée de rayonnage, en étant traitée et transportée dans le convoyeur vertical (6) comme une charge située dans le rayonnage, c'est-à-dire comme si elle était déjà dans le rayonnage et comme si elle devait seulement être sortie du compartiment de rayonnage, transportée dans l'allée de rayonnage et remise dans le rayonnage à un endroit voulu,
d) la charge (10) est acheminée dans le sens horizontal dans l'allée (2) jusqu'à une destination située dans le plan de destination correspondant, et
e) la charge est acheminée, dans le sens horizontal, de l'allée (2) jusqu'au rayonnage.

2. Procédé selon la revendication 1, **caractérisé en ce que** lors du déstockage de charges (10), les étapes a) à e) sont exécutées dans l'ordre inverse.

3. Procédé selon la revendication 1 ou 2, **caractérisé en ce que** chaque changement de direction lors de l'acheminement de la charge (10) est effectué avec un angle de 90°.

4. Système pour stocker et déstocker des charges dans un entrepôt à rayonnages comprenant plusieurs rangées de rayonnages (1) et des allées (2) situées entre celles-ci, dans lequel il est prévu une voie de stockage (4) qui longe les côtés frontaux des rangées de rayonnages (1), il est prévu dans les allées de rayonnages (2) plusieurs guides (16) associés à des plans individuels desdites rangées, il est prévu des dispositifs de transport (11) qui sont mobiles sur les guides (16) et qui sont aptes à recevoir les charges (10), il est prévu en liaison avec les dispositifs de transport (11) un dispositif pour amener latéralement les charges dans les rayonnages, et il est prévu des convoyeurs verticaux (6) qui sont réalisés à la manière d'un ascenseur, qui sont accessibles grâce à la voie de stockage (4) et qui permettent le passage des dispositifs de transport (11) sur cette dernière, en particulier pour la mise en oeuvre du procédé selon l'une des revendications 1 à 3,
**caractérisé en ce que** les convoyeurs verticaux (6) sont disposés sur les côtés frontaux des rangées de rayonnages (1) de telle sorte qu'une charge située dans le convoyeur vertical puisse être manipulée comme une charge située dans le rayonnage, étant précisé que dans l'entrepôt à rayonnages, plusieurs convoyeurs verticaux sont prévus le long de la voie de stockage (4).

5. Système de stockage selon la revendication 4, **caractérisé en ce que** le fond du convoyeur vertical (6) est identique au fond du rayonnage, de sorte que le fond, après avoir atteint le plan de destination, peut être approché exactement comme la destination de rayonnage habituelle, pour recevoir ou déposer une charge.

6. Système de stockage selon la revendication 5, **caractérisé en ce que** le dispositif pour amener latéralement les charges dans les rayonnages est formé par un mécanisme de levage et de poussée (12).

7. Système selon l'une des revendications 4 à 6, **caractérisé en ce qu'**il est prévu aux extrémités des rangées de rayonnages (2) des dispositifs de levage grâce auxquels les charges peuvent être soulevées par rapport aux guides (16).

8. Système selon l'une des revendications 4 à 7, **caractérisé en ce qu'**on associe à chaque plan des rangées de rayonnages (1) plusieurs éléments de rayonnage (27) et **en ce que** les guides (16) sont intégrés dans les éléments de rayonnage (27).

9. Système selon l'une des revendications 4 à 8, **caractérisé en ce que** les dispositifs de levage et les dispositifs de transport sont mobiles grâce à des systèmes de traction.

10. Système selon l'une des revendications 4 à 9, **caractérisé en ce qu'**il est prévu dans les allées de rayonnage (2) deux dispositifs de transport (11) reliés entre eux.

11. Système selon l'une des revendications 4 à 10, **caractérisé en ce que** le dispositif de transport (11) comporte des rouleaux (18) qui ont une surface de roulement adaptée à la forme du guide.

12. Système selon l'une des revendications 4 à 11, **caractérisé en ce qu'**il comporte un dispositif de levage et de poussée qui présente dans la zone inférieure des roues de roulement (22) et un dispositif de levage agissant vers le haut, de sorte que des charges peuvent être soulevées et que le poids agit sur le fond.

13. Système selon la revendication 12, **caractérisé en ce que** le dispositif de levage et de poussée (12) comporte plusieurs tringles (24) destinées à soulever un élément de levage (23) et prévue dans la zone des roues de roulement (22).
